# EUROPEAN PATENT SPECIFICATION

(11) **EP 1 884 411 B1**
(45) Date of publication and mention of the grant of the patent: **07.03.2012**
(21) Application number: 06015882.1
(22) Date of filing: 31.07.2006
(51) Int. Cl.: B60R 21/213, B60R 13/02

(54) **Vehicle roof lining with attachment for air bag system**
Fahrzeug-Dachauskleidung mit integrierten Kopf-Seiten-Airbag-Modulen
Revêtement de toit de véhicule comprenant des modules coussins gonflables latéraux intégrés pour la tête

(43) Date of publication of application: 06.02.2008
(73) Proprietor: Johnson Controls GmbH, 51399 Burscheid (DE); AUTOLIV DEVELOPMENT AB, 447 83 Vargarda (SE)
(72) Inventor: Hasler, Alexander, Dr., 40627 Düsseldorf (DE); Krebs, Hans-Ulrich, 45549 Sprockhövel (DE); Torstensson, Hans, 43169 Mölndal (SE); Orrelid, Hakan, 414 73 Gothenburg (SE); Henricsson, Peter, 426 52 Västra Frölunda (SE); Lindberg, Ken, 447 31 Vargarda (SE)
(74) Representative: Schwöbel, Thilo K.

(56) References cited:
- EP-A1- 1 050 436
- WO-A-02/28690
- WO-A-03/106216
- DE-A1- 10 309 173
- DE-A1- 19 838 069
- DE-A1-102004 033 295
- DE-U1-202004 014 219
- GB-A- 2 394 921
- US-A1- 2004 100 077
- US-A1- 2005 023 811

## Description

The invention relates to an interior equipment part for a vehicle, comprising a lining with a pre-assembled airbag system and to methods for pre-assembly, final assembly and disassembly of the Interior equipment part.

It is known in the art to arrange airbag systems between a vehicle structure and an interior lining. As the airbag system and lining are predominantly assembled separately from each other, the increasing number of airbag systems for specific crash situations requires additional logistics, storage- and assembly space and manpower.

From EP 0 903 270 B1, a vehicular roof lining it is known to comprise an integrated head protection restrained means which together constitute a pre-assembled module. Two folded gas bags are stowed into receptacles along the long side of the roof lining and both are connected to a compressed gas source which is located at a short side of the lining. One drawback of the known roof lining is, that the pre-assembly of the gas bags into receptacles is complex and time consuming. Further, the compressed gas source needs particular assembly and has to be connected to the gas bags.

Another similar device according to the preamble of claim 1 is shown with the US 2004100077.

It is therefor an object of the present invention to provide an Interior equipment part for a vehicle, comprising a lining with a pre-assembled airbag system that facilitates pre-assembly by saving storage- and assembly space and manpower.

The above objective is accomplished by an interior equipment part for a vehicle, comprising a lining with a pre-assembled airbag system, wherein at least one attachment part and a mounting bracket are fixedly and detachably arranged at the lining by at least one fastening means, the airbag system being arranged at the mounting bracket.

The vehicle is preferably, but not exclusively, a motor vehicle. The attachment part in the sense of the invention is any vehicle interior part which is arranged on the surface of the lining which faces the interior of the vehicle. The attachment part may be, for example, a deposition compartment, a coat hanger or, preferably, just a part of these, like a base plate. The person skilled in the art understands that the attachment part is arranged on the interior facing side of the lining and that the airbag system is arranged on the opposite side of the lining which usually faces a structure of the vehicle.

An advantage of the Interior equipment part according to the present invention is that the airbag system is easily pre-assembled to the mounting bracket in a short time. Advantageously, the mounting bracket is fixed to the lining by the same fastening means as the attachment part. The number of fastening means is thus not increased. The fastening means, for example, protrudes through respective aligned recesses of the attachment part, the lining and the mounting bracket.

Preferably the attachment part is a grab handle or a part of the grab handle, particularly a base or foot upon which the grab handle is mounted. Grab handles are advantageously arranged at a headlining of the vehicle and/or at the door trims. In both locations, headliner and door trim, the application of an airbag system is most desirable. The attachment of the mounting bracket, together with the grab handle at the lining is advantageous, as the grab handle provides a rigid structure. The mounting bracket thus provides a rigid fixation of the airbag system. The grab handle is preferably fixedly arranged at the lining by two fastening means, one or both of which can be used for fixing the mounting bracket.

The mounting bracket is preferably fixedly arranged between two attachment parts by fastening means. The mounting bracket advantageously provides a more rigid base for the airbag system if it is fixed at two points.

In a preferred embodiment of the invention, the lining is a headlining, the mounting bracket being fixed between two attachment parts, of which a first attachment part is provided at a front grab handle and a second attachment part is provided at a rear grab handle. An advantage of this embodiment is, that along the long sides of the headlining, the preferred location for an airbag system, normally two grab handles are attached, the base plates or foots of which can be most advantageously used for fixation of the mounting bracket to the headlining.

The airbag system preferably comprises a gas generator, which is fixed to the mounting bracket. A rigid fixation is especially important for the gas generator upon which high forces are applied while the airbag is inflated. The airbag system preferably comprises an inflatable curtain airbag which is advantageously applicable in a headliner. The inflatable curtain airbag is preferably rolled and more preferable spans at least the length of the complete headliner, particularly, the inflatable curtain airbag spans the length of the complete vehicle roof.

The inflatable curtain airbag is preferably arranged at the gas generator which advantageously enhances the pre-assembly of the inventive interior equipment part, as the gas generator and the inflatable curtain airbag need not be fixed separately from each other, at least in the proximity of the mounting bracket. For fixation purposes, the airbag system preferably comprises fixation lugs, the fixation lugs being arranged for fixation of the airbag system to the lining by the fastening means. The airbag system is preferably additionally fixed to a structure of the vehicle either by fastening means according to the invention or by any appropriate fixing means.

In a preferred embodiment, the fastening means comprises a bushing for receiving a fixation screw. The fixation screw is used for fixing the interior equipment part to a structure of the vehicle. Advantageously, the interior equipment part does not need separate fixation points. The fastening means and thus also the attachment part and the mounting bracket are rigidly fixed to the vehicle structure. A receptacle for the fixation screw at the vehicle structure is known in the art.

The fastening means preferably comprises twist-lock elements, as for example noses which are arranged at the outer perimeter of a first end of the bushing. The recesses of the attachment part, the lining and the mounting bracket, for example, comprise a complementary contour, such that the bushing with the twist-lock noses can be transfixed through the attachment part, the lining and the mounting bracket. The bushing is then twisted, such that the noses are locked behind, for example, the mounting bracket. The second end of the bushing preferably comprises an opposite support, such as a flange which can be slotted for receiving a screwdriver, for example.

In a further preferred embodiment, the mounting bracket comprises at least one snap-locking means for fixation of the mounting bracket to a structure of the vehicle. The mounting bracket is, for example, snap-locked loosely and/or temporarily to the structure, prior to the final fixation of the inventive interior equipment part to the structure by the fixation screw. The assembly of the interior equipment part is thus enhanced. Further, the lining can be easily disassembled by unscrewing the fixation screw and detaching the fastening means, while the mounting bracket and the airbag system stay attached to the structure by the preferably loose fixation by the snap-locking means.

The present invention further refers to a method for pre-assembling the interior equipment part according to the invention, the method comprising the steps of:
- fixing the airbag system to the mounting bracket and
- joining the attachment part, the lining and the mounting bracket together by twist-locking the fastening means.

The interior equipment part is advantageously easy and safely pre-assembled in a short time by the inventive method.

The present invention still further refers to a method for final assembly of the inventive interior equipment part to a structure of the vehicle by inserting a fixation screw for detachably fixing the interior equipment part to the structure through a bushing of the fastening means. Preferably the mounting bracket and thus the interior equipment part is fixed to the structure by a snap-locking means, prior to the fixation by the fixation screw.

The assembly of the interior equipment part is enhanced, because the interior equipment part can be loosely and/or temporarily pre-fixed to the structure, prior to its final fixation by the fixation screw.

The present invention still further refers to a method for disassembly of the inventive interior equipment part which is pre-assembled and assembled to a structure of the vehicle according to the inventive methods as described in here before, the method for disassembly comprising the steps of:
- unscrewing the fixation screw,
- unscrewing the twist-locked fastening means and
- dismounting the lining, the airbag system staying in position with the mounting bracket fixed to the structure, preferably loosely fixed.

The safety for disassembly of the inventive interior equipment part is enhanced, as the airbag system stays in position and electrically connected, while only the lining and/or the attachment part can be replaced, due to dirt stains or defect, for example.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.
**Figures 1 (a), (b)** and **(c)** illustrate the fixing of the airbag system to the mounting bracket according to the present invention.
**Figures 2 (a), (b)** and **Figure 3** illustrate the pre-assembly of the interior equipment part in two embodiments of the invention.
**Figure 4** shows a perspective view of a fastening means according to the present invention.
**Figure 5** shows a perspective view of an interior equipment part according to the present invention.
**Figure 6** illustrates the assembly of the inventive interior equipment part to a vehicle structure.
**Figure 7** shows a detail of the assembled interior equipment part according to the invention in a perspective view.
**Figure 8** is a sectional view of the detail in **Figure 7**.

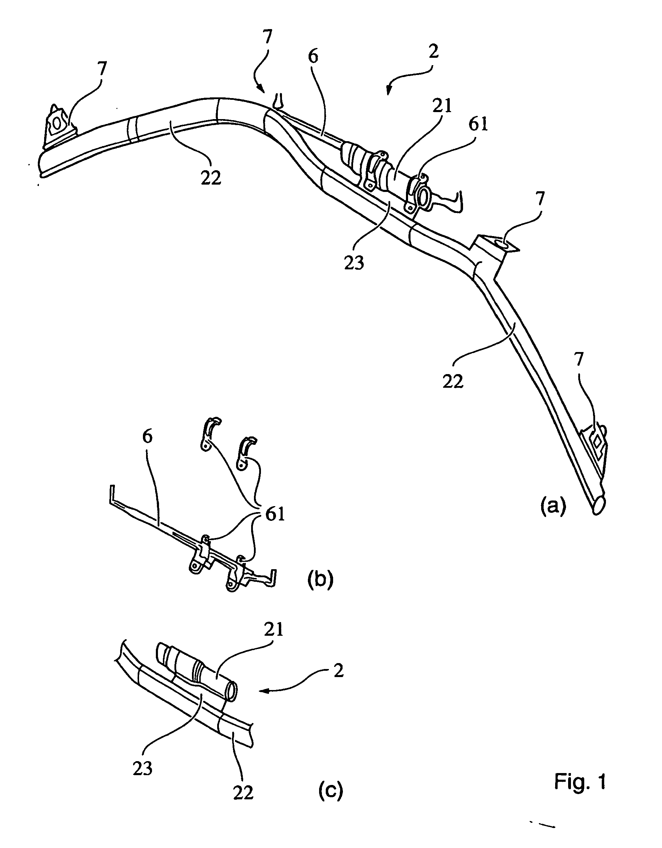

In **Figures 1 (a)** and **(c)**, an airbag system 2 is depicted. The depicted airbag system 2 is a head-protective curtain airbag which is commonly arranged behind a vehicular headliner. However, other types of airbag systems 2 can be used with the present application as well. The airbag system 2 comprises a gas generator 21 for inflating an inflatable curtain airbag 22. The inflatable curtain airbag 22 is connected to the gas generator 21 by connection 23. The inflatable curtain airbag 22 comprises fixation lugs 7, two of which are located at the ends of the inflatable curtain airbag 22, two more in the middle. The fixation lugs 7 comprise metal or synthetics reinforcements for attachment to a headliner and/or vehicle structure, which are both not depicted. In **Figure 1 (a)**, the gas generator 22 is connected to a mounting bracket 6, a rigid member of metal or durable plastics or a combination of both. As best seen in **Figure 1 (b)**, the gas generator 21 is fixed to the mounting bracket 6 by clamps 61, first halves of the clamps 61 being integrated into mounting bracket 6 and second halves of the clamps 61 being separate. The clamps 61 also secure the connection 23.

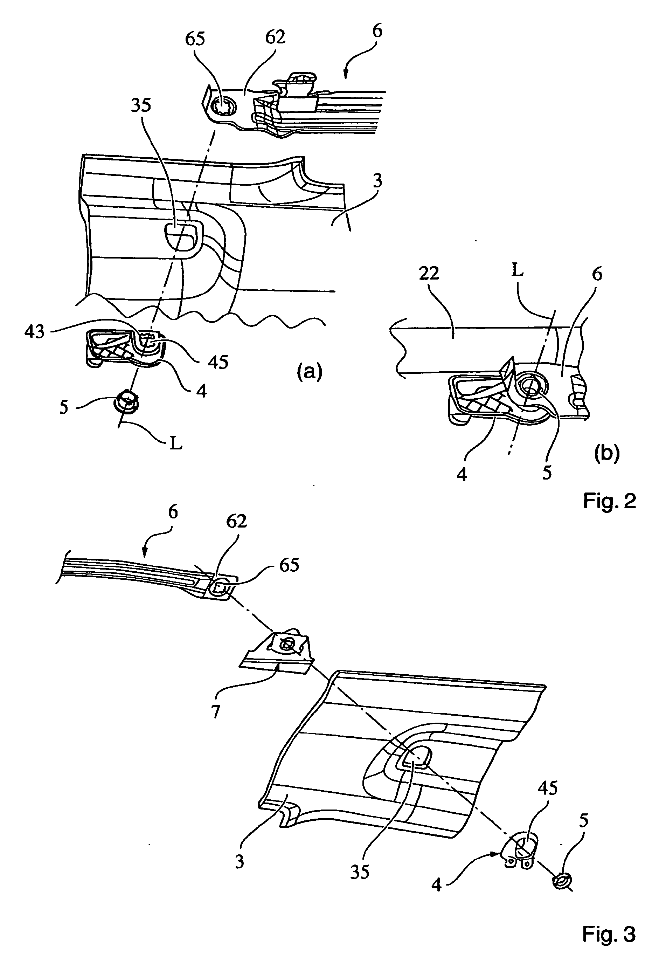

In **Figure 2 (a)**, a mounting link 62 at one end of the mounting bracket 6 is depicted without the airbag system 2 being attached to the mounting bracket 6 yet. The mounting link 62 comprises a recess 65. A lining 3 which can be, for example, a door trim of a vehicle door or a headlining for a vehicle roof, comprises a recess 35, the recess 35 being formed such that a protrusion 43 of an attachment part 4 fits into it. the attachment part 4 is a base plate or foot of a roof grab handle or door grab handle, which is not depicted. The protrusion 43 of the attachment part 4 comprises a recess 45. As illustrated by dashed line L, a fastening means 5 is insertable through the recesses 45, 35, and 65 to connect the attachment part 4, the lining 3 and the mounting bracket 6. The fastening means 5 is preferable secured by twist-locking it. The attachment part 4, the fastening means 5 and the mounting bracket 6 (the lining 3 is not shown) are depicted in **Figure 2 (b)** in assembled condition, the inflatable curtain airbag 22 partly visible which is now attached to the mounting bracket 6. The person skilled in the art understands, that generally the airbag system 2 is fixed to the mounting bracket 6 prior to connecting the attachment part 4, the lining 3 and the mounting bracket 6 by fastening means 5.

In **Figure 3**, again, the pre-assembly of the attachment part 4, the lining 3 and the mounting bracket 6 by fastening means 5 is depicted, with one of the fixation lugs 7 of the airbag system 2 which is not depicted, also being fixed. The fastening means 5 is inserted additionally through a recess of the reinforced fixation lug 7, which is arranged between the lining 3 and the mounting link 62 of the mounting bracket 6.

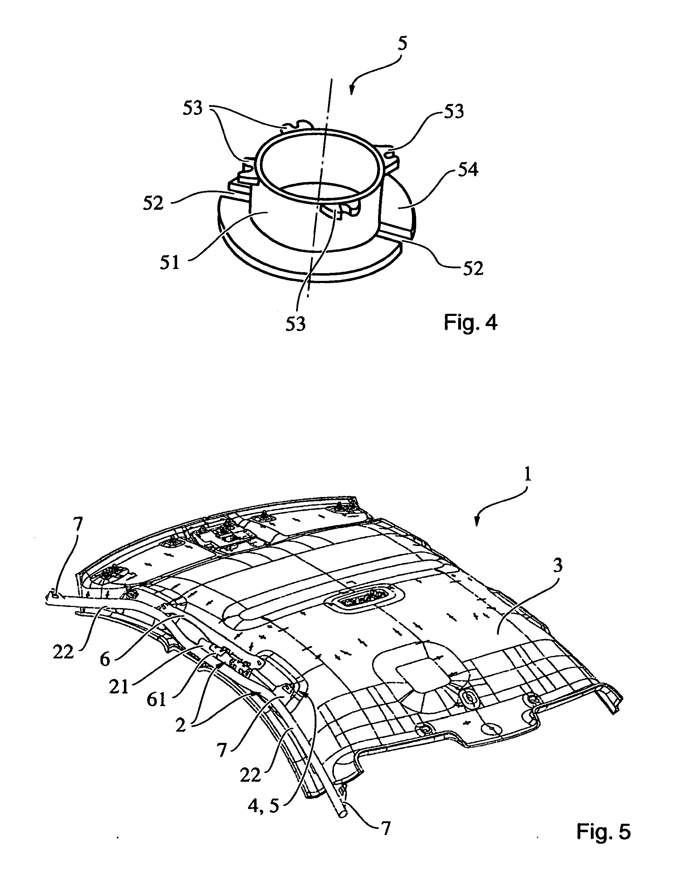

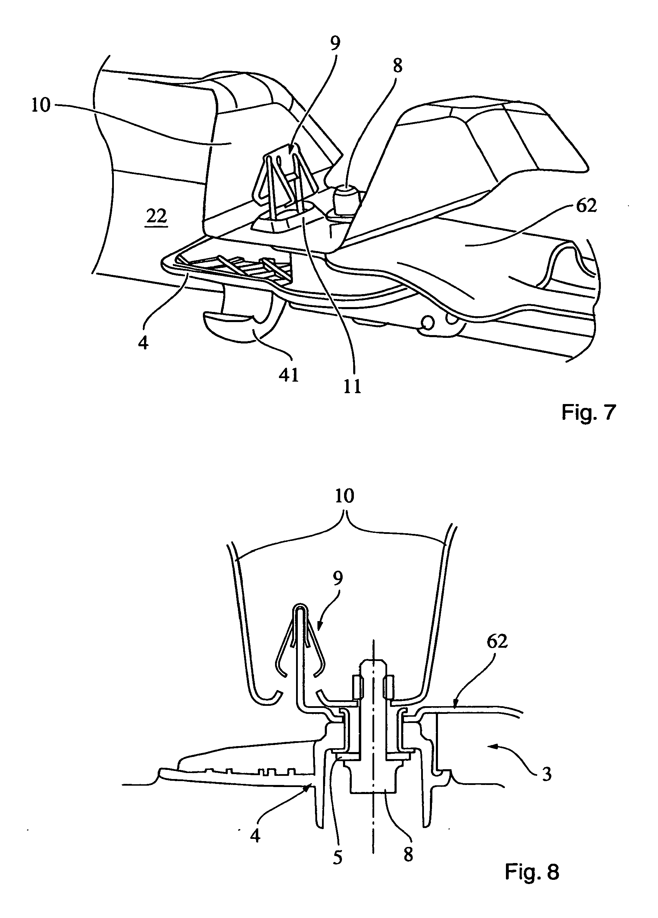

**Figure 4** shows the fastening means 5 in an enlarged perspective view. The fastening means 5 comprises a bushing 51 for a fixation screw 8 (cf. Figure 8). At an outer perimeter of a first end of the bushing 51, which is inserted first into the recesses 45, 35 and 65, four twist-lock noses 53 are arranged. The twist-lock noses 53 fit through the complementary contours of the recesses 45, 35 and 65 and lock the attachment part 4, the lining 3 and the mounting bracket 6, when twisted about an angle of about 10° to 80°, preferably about 45°. The person skilled in the art knows that the angle depends upon the angular distance of the twist-lock noses 53, respectively upon their number which may be chosen arbitrarily. On the second end, the bushing 51 comprises a flange 54 with slots 52 for a screwdriver or other suitable kind of twisting device.

In **Figure 5**, the pre-assembled interior equipment part 1 is depicted. The lining 3 is a headliner with a pre-assembled airbag system 2, comprising of a gas generator 21 and an inflatable curtain airbag 22 which extends beyond the lining 3. The fixation lugs 7, two of which are arranged at the outer ends of the inflatable curtain airbag 22 are fixed, preferably to a pillar structure of the vehicle. Further fixation lugs 7 are fixed to the lining 3 by fastening means 5, preferably at attachment parts 4. In this case, one inner fixation lug 7 is attached at the rear foot of the rear grab handle, the mounting bracket 6 is fixed between the front foot of the rear grab handle and the rear foot of the front grab handle, where also a second inner fixation lug 7 is attached. Thus, the front foot of the front grab handle is not used for the pre-assembly of the airbag system 2. The gas generator 21 is fixed to the mounting bracket 6 by clamps 61.

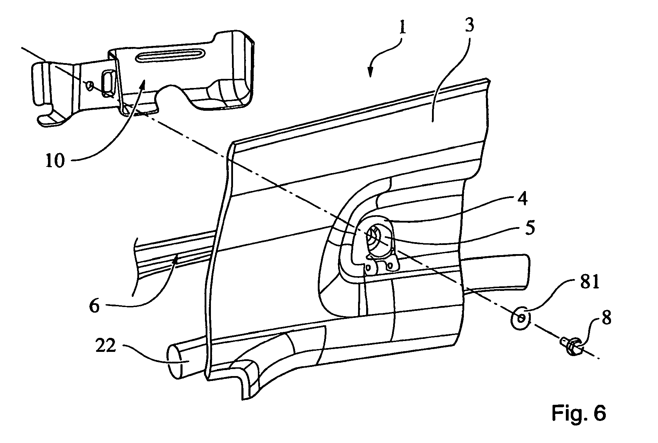

In **Figure 6**, the assembly of the pre-assembled interior equipment part 1 to a structure 10 of the vehicle is depicted. Of the structure 10 only a structure bracket 10 is depicted which is, for example, welded to a car body. The fixation screw 8 is inserted through a washer 81 and the fixation means 5 and is then screwed to the structure bracket 10.

In **Figures 7** and **8**, a part of the pre-assembled interior equipment part 1 is depicted, assembled to the vehicle structure 10. The attachment part 4 is a grab handle foot with a hook 41. A tip of the screwed fixation screw 8 protrudes through the structure bracket 10. A snap-locking means 9 is arranged at the mounting link 62 of the mounting bracket 6 which protrudes through a slot 11 of the structure bracket 10. With the fixation screw 8 fixed, the snap-locking means 9 does not contribute to the fixation of the mounting bracket 6. If the fixation screw 8 is unscrewed, the mounting bracket 6 stays loosely fixed in position at the structure bracket 10, carried by the snap-locking means 9. If the twist-locked fastening means 5 is unlocked, the attachment part 4 and the lining 3 can be removed without detaching the mounting bracket 6 and the airbag system 2.

### Reference signs:

- 1: Interior equipment part
- 2: Airbag system
- 3: Lining
- 4: Attachment part
- 5: Fastening means
- 6: Mounting bracket
- 7: Fixation lugs
- 8: Fixation screw
- 9: Snap-locking means
- 10: Vehicle structure, structure bracket
- 11: Structure bracket slot
- 21: Gas generator
- 22: Inflatable curtain airbag
- 23: Connection
- 35: Lining recess
- 43: Attachment part protrusion
- 45: Attachment part recess
- 51: Bushing
- 52: Slots
- 53: Twist-lock noses
- 54: Flange
- 61: Clamps
- 62: Mounting link
- 65: Mounting bracket recess
- 81: Washer
- L: Line

## Claims

1. Interior equipment part (1) for a vehicle, comprising a lining (3) with an airbag system (2), the airbag system (2) being pre-assembled, **characterized in that** at least one attachment part (4) and a mounting bracket (6) are fixedly and detachably arranged at the lining (3) by at least one fastening means (5), the airbag system (2) being arranged at the mounting bracket (6), the fastening means (5) comprising twist-lock elements (52, 53), the fastening means (5) being insertable through recesses (45, 35, 65) to connect the attachment part (4), the lining (3) and the mounting bracket (6).

2. Interior equipment part according to claim 1, **characterized in that** the attachment part (4) is a grab handle or a part of the grab handle, the grab handle preferably being fixedly arranged at the lining (3) by two fastening means (5).

3. Interior equipment part according to one of claims 1 or 2, **characterized in that** the mounting bracket (6) is fixedly arranged between two attachment parts (4) by fastening means (5).

4. Interior equipment part according to one of the preceding claims, **characterized in that** the lining (3) is a headlining, the mounting bracket (6) being fixed between two attachment parts (4), of which a first attachment part is provided at a front grab handle and a second attachment part is provided at a rear grab handle.

5. Interior equipment part according to one of the preceding claims, **characterized in that** the airbag system (2) comprises a gas generator (21), the gas generator being fixed to the mounting bracket (6).

6. Interior equipment part according to claim 5, **characterized in that** the airbag system (2) comprises an inflatable curtain airbag (22) which is preferably rolled, the inflatable curtain airbag being fixedly arranged at the gas generator (21).

7. Interior equipment part according to one of the preceding claims, **characterized in that** the airbag system (2) comprises fixation lugs (7), the fixation lugs being arranged for fixation of the airbag system (2) to the lining (3) by the fastening means (5) and/or to a structure of the vehicle.

8. Interior equipment part according to one of the preceding claims, **characterized in that** the fastening means (5) comprises a bushing (51) for receiving a fixation screw (8) for fixing the Interior equipment part (1) to a structure (10) of the vehicle.

9. Interior equipment part according to one of the preceding claims, **characterized in that** the mounting bracket (6) comprises at least one snap-locking means (9) for fixation of the mounting bracket to a structure (10) of the vehicle, particular for the case of maintenance.

10. Method for pre-assembling an Interior equipment part (1) according to one of the preceding claims, comprising the steps of:
- fixing the airbag system (2) to the mounting bracket (6) and
- joining the attachment part (4), the fining (3) and the mounting bracket (6) together by twist-locking the fastening means (5).

11. Method for final assembly of an Interior equipment part (1) according to one of claims 1 to 9 to a structure of the vehicle (10)by inserting a fixation screw (8) for detachably fixing the Interior equipment part (1) to the structure (10) through a bushing (51) of the fastening means (5).

12. Method according to claim 11, further comprising the step of fixing the mounting bracket (6) to the structure (10) by a snap-locking means (9).

13. Method for disassembly of an Interior equipment part (1) according to one of claims 1 to 9 which is pre-assembled and assembled to a structure (10) of the vehicle, according to the methods of claims 11 and 12 comprising the steps of:
- unscrewing the fixation screw (8),
- unscrewing the twist-locked fastening means (5) and
- dismounting the lining (3), the airbag system (2) staying in position with the mounting bracket (6) fixed to the structure (10).

## Patentansprüche

1. Innenausstattungsteil (1) für ein Fahrzeug, das eine Auskleidung (3) mit einem Airbagsystem (2) enthält, wobei das Airbagsystem (2) vormontiert ist, **dadurch gekennzeichnet, dass** mindestens ein Anbauteil (4) und eine Halterung (6) durch mindestens eine Befestigungseinrichtung (5) fest und lösbar an der Auskleidung (3) angeordnet sind, wobei das Airbagsystem (2) an der Halterung (6) angeordnet ist, wobei die Befestigungseinrichtung (5) Drehverriegelungselemente (52, 53) aufweist, wobei die Befestigungseinrichtung (5) durch Aussparungen (45, 35, 65) einführbar ist, um das Anbauteil (4), die Auskleidung (3) und die Halterung (6) zu verbinden.

2. Innenausstattungsteil nach Anspruch 1, **dadurch gekennzeichnet, dass** das Anbauteil (4) ein Handgriff oder ein Teil des Handgriffs ist, wobei der Handgriff vorzugsweise durch zwei Befestigungseinrichtungen (5) fest an der Auskleidung (3) angeordnet ist.

3. Innenausstattungsteil nach einem der Ansprüche 1 oder 2, **dadurch gekennzeichnet, dass** die Halterung (6) durch die Befestigungseinrichtung (5) fest zwischen zwei Anbauteilen (4) angeordnet ist.

4. Innenausstattungsteil nach einem der vorhergehenden Ansprüche, **dadurch gekennzeichnet, dass** die Auskleidung (3) eine Dachauskleidung ist, wobei die Halterung (6) zwischen zwei Anbauteilen (4) befestigt ist, von denen ein erstes Anbauteil an einem vorderen Handgriff und ein zweites Anbauteil an einem hinteren Handgriff vorgesehen ist.

5. Innenausstattungsteil nach einem der vorhergehenden Ansprüche, **dadurch gekennzeichnet, dass** das Airbagsystem (2) einen Gasgenerator (21) aufweist, wobei der Gasgenerator an der Halterung (6) befestigt ist.

6. Innenausstattungsteil nach Anspruch 5, **dadurch gekennzeichnet, dass** das Airbagsystem (2) einen Vorhangairbag (22) aufweist, der vorzugsweise gerollt ist, wobei der Vorhangairbag fest am Gasgenerator (21) angeordnet ist.

7. Innenausstattungsteil nach einem der vorhergehenden Ansprüche, **dadurch gekennzeichnet, dass** das Airbagsystem (2) Befestigungslaschen (7) aufweist, wobei die Befestigungslaschen zur Befestigung des Airbagsystems (2) an der Auskleidung (3) durch die Befestigungseinrichtung (5) und/oder an einer Struktur des Fahrzeugs angeordnet sind.

8. Innenausstattungsteil nach einem der vorhergehenden Ansprüche, **dadurch gekennzeichnet, dass** die Befestigungseinrichtung (5) eine Buchse (51) zur Aufnahme einer Befestigungsschraube (8) zur Befestigung des Innenausstattungsteils (1) an einer Struktur (10) des Fahrzeugs aufweist.

9. Innenausstattungsteil nach einem der vorhergehenden Ansprüche, **dadurch gekennzeichnet, dass** die Halterung (6) mindestens eine Schnappverschlusseinrichtung (9) zur Befestigung der Halterung an einer Struktur (10) des Fahrzeugs aufweist, insbesondere für den Fall einer Wartung.

10. Verfahren zur Vormontage eines Innenausstattungsteils (1) nach einem der vorhergehenden Ansprüche, das die folgenden Schritte aufweist:
- Befestigen des Airbagsystems (2) an der Halterung (6) und
- Verbinden des Anbauteils (4), der Auskleidung (3) und der Halterung (6) aneinander durch Drehverriegelung der Befestigungseinrichtung (5).

11. Verfahren zur Endmontage eines Innenausstattungsteils (1) nach einem der Ansprüche 1 bis 9 an eine Struktur des Fahrzeugs (10) durch Einführen einer Befestigungsschraube (8) zum lösbaren Befestigen des Innenausstattungsteils (1) an der Struktur (10) durch eine Buchse (51) der Befestigungseinrichtung (5).

12. Verfahren nach Anspruch 11, das weiter den Schritt des Befestigens der Halterung (6) an der Struktur (10) durch eine Schnappverriegelungseinrichtung (9) aufweist.

13. Verfahren zum Demontieren eines Innenausstattungsteils (1) nach einem der Ansprüche 1 bis 9, das vormontiert und an eine Struktur (10) des Fahrzeugs montiert ist, gemäß den Verfahren der Ansprüche 11 und 12, das die folgenden Schritte aufweist:
- Losschrauben der Befestigungsschraube (8),
- Losschrauben der drehverriegelten Befestigungseinrichtung (5) und
- Demontieren der Auskleidung (3), wobei das Airbagsystem (2) mit der Halterung (6) an der Struktur (10) befestigt in Stellung bleibt.

## Revendications

1. Pièce d'équipement intérieur (1) pour un véhicule, comprenant un habillage (3) avec un système de coussins gonflables (2), le système de coussins gonflables (2) étant pré-assemblé, **caractérisée en ce qu'**au moins une pièce d'attache (4) et une console de montage (6) sont agencées de manière fixée et détachable à l'habillage (3) par au moins un moyen de fixation (5), le système de coussins gonflables (2) étant agencé sur la console de montage (6), les moyens de fixation (5) comprenant des éléments de verrou tournant (52, 53), les moyens de fixation (5) étant insérables à travers des creux (45, 35, 65) pour connecter la pièce d'attache (4), l'habillage (3) et la console de montage (6).

2. Pièce d'équipement intérieur selon la revendication 1, **caractérisée en ce que** la pièce d'attache (4) est une poignée de prise ou une partie d'une poignée de prise, la poignée de prise étant de préférence agencée de façon fixée à l'habillage (3) par deux moyens de fixation (5).

3. Pièce d'équipement intérieur selon l'une quelconque des revendications 1 ou 2, **caractérisée en ce que** la console de montage (6) est agencée de façon fixée entre deux pièces d'attache (4) par des moyens de fixation (5).

4. Pièce d'équipement intérieur selon l'une quelconque des revendications précédentes, **caractérisée en ce que** l'habillage (3) est un habillage de tête, la console de montage (6) étant fixée entre deux pièces d'attache (4), dont une première pièce d'attache est prévue sur une poignée de prise avant et une deuxième pièce d'attache est prévue sur une poignée de prise arrière.

5. Pièce d'équipement intérieur selon l'une quelconque des revendications précédentes, **caractérisée en ce que** le système de coussins gonflables (2) comprend un générateur de gaz (21), le générateur de gaz étant fixé à la console de montage (6).

6. Pièce d'équipement intérieur selon la revendication 5, **caractérisée en ce que** le système de coussins gonflables (2) comprend un coussin gonflable en rideau gonflable (22), qui est de préférence enroulé, le coussin gonflable en rideau gonflable étant agencé de façon fixée sur le générateur de gaz (21).

7. Pièce d'équipement intérieur selon l'une quelconque des revendications précédentes, **caractérisée en ce que** le système de coussins gonflables (2) comprend des pattes de fixation (7), les pattes de fixation étant agencées en vue d'une fixation du système de coussins gonflables (2) à l'habillage (3) par les moyens de fixation (5) et/ou à une structure du véhicule.

8. Pièce d'équipement intérieur selon l'une quelconque des revendications précédentes, **caractérisée en ce que** les moyens de fixation (5) comprennent une douille (51) destinée à recevoir une vis de fixation (8) pour fixer la pièce d'équipement intérieur (1) à une structure (10) du véhicule.

9. Pièce d'équipement intérieur selon l'une quelconque des revendications précédentes, **caractérisée en ce que** la console de montage (6) comprend au moins un moyen de verrouillage à déclic (9) pour la fixation de la console de montage à une structure (10) du véhicule, en particulier en cas de maintenance.

10. Procédé de pré-assemblage d'une pièce d'équipement intérieur (1) selon l'une quelconque des revendications précédentes, comprenant les étapes suivantes:
- fixer le système de coussins gonflables (2) à la console de montage (6), et
- joindre la pièce d'attache (4), l'habillage (3) et la console de montage (6) les uns aux autres par verrouillage tournant des moyens de fixation (5).

11. Procédé pour l'assemblage final d'une pièce d'équipement intérieur (1) selon l'une quelconque des revendications 1 à 9 à une structure du véhicule (10), en insérant une vis de fixation (8) pour fixer de façon détachable la pièce d'équipement intérieur (1) à la structure (10) à travers une douille (51) des moyens de fixation (5).

12. Procédé selon la revendication 11, comprenant en outre l'étape de fixation de la console de montage (6) à la structure (10) par des moyens de verrouillage à déclic (9).

13. Procédé pour démonter une pièce d'équipement intérieur (1) selon l'une quelconque des revendications 1 à 9, qui est pré-assemblée et assemblée à une structure (10) du véhicule selon le procédé des revendications 11 et 12, comprenant les étapes suivantes:
- dévisser la vis de fixation (8),
- dévisser les moyens de fixation à verrou tournant (5), et
- démonter l'habillage (3), le système de coussins gonflables (2) restant en place avec la console de montage (6) fixée à la structure (10).
